# EUROPEAN PATENT APPLICATION

(11) **EP 0 741 356 A1**
(43) Date of publication of application: **06.11.1996**
(21) Application number: 96106215.5
(22) Date of filing: 19.04.1996
(51) Int. Cl.: G06F 12/08, G06F 9/38

(54) **Cache architecture and method of operation**

(30) Priority: 05.05.1995 US 436049
(71) Applicant: ROCKWELL INTERNATIONAL CORPORATION, Seal Beach, California 90740-8250 (US)
(72) Inventor: Glass, Kevin W., Scottsdale, Arizona 85259 (US); Bindloss, Keith M., Irvine, California 92714 (US)
(74) Representative: Wagner, Karl H., Dipl.-Ing.

(57) **Abstract**

A novel cache architecture is disclosed that includes an autonomous cache memory address unit (200) for generating, independently of processor control, addresses to a cache (300) in support of cache operations. Block prefetch and writeback instructions are disclosed that can be used to import large amounts of data into a cache (300), or remove data therefrom, at a time before program execution requires those data or free memory space. In this way processor stalls are avoided. An aging/write buffer (340) provides a temporary buffer for cache evictions, which can itself be used as cache memory space. A cache tag interleaving scheme allows multiple simultaneous tag comparisons to addresses provided by different buses. Cache memory data blocks can also be interleaved.

## Description

### BACKGROUND OF THE INVENTION

Cache memories are well-known in the computer arts. A cache memory is a small fast memory located between the processor and the main memory in a computer system. Addresses, instructions and data that are normally stored in main memory may be temporarily stored in the cache for faster access by the processor. When managed properly, caches and other forms of fast-access memory can reduce the time required by a processor to access data and execute a program.

A cache memory includes storage space for storing a series of addresses and the data words corresponding to those addresses. The cache memory is organized into "lines," or short sequences of contiguous data copied from the main memory. Each line can be identified by an associative address "tag." Cache address tags are said to be "associative" to the extent that they associate a line of data with some or all of the main memory address bits. Thereby, one physical location in the cache can be used at different times to store lines of data associated with different address tag bits.

When the processor issues a memory access request in a system having a cache, an operation is performed to determine whether the data associated with the requested address are already located in the cache. A cache "hit" occurs when the memory access request can be serviced out of the cache without having to access main memory. Conversely, a "miss" occurs when the data associated with the requested address are not already present in the cache. When such a miss occurs, an operation is required to transfer the data associated with the requested address from main memory to the processor and/ or into the cache memory. This transfer operation takes time and reduces the effective speed of the processor in executing a program.

The ratio of "hits" to "misses" is an important performance criterion in evaluating the usefulness of a cache. Cache management strategies exploit the concepts of spatial and temporal locality of data reference in order to maximize the hit ratio. The principle of spatial locality of data reference deals with the property of executable programs that an access to memory address N increases the probability that address N + 1 will be accessed. The principle of temporal locality of data reference deals with a property of executable programs that the same data are likely to be reused within a relatively short interval of time; some memory addresses are accessed repeatedly during execution of a program. As a general matter, caches are most useful in systems where the application exhibits high spatial and temporal locality of data reference.

In some applications employing caches in the prior art, the cache hit ratios have been improved by the use of "prefetch" operations inserted strategically throughout the executable code by a system programmer to give the cache subsystem hints of what addresses are likely to be referenced. A prefetch instruction operates by anticipating the data needs of the program being executed and insuring that those data are in the cache memory when they are requested by the processor. In this way, program execution time is reduced by not having to stall the processor operation to service misses.

In operation, prefetch instructions cause the computer system to inquire whether the data associated with a certain address that will be needed imminently for execution of the program are already in the cache. If the data are in the cache, the prefetch operation takes no further action and program execution continues. If, however, the data are not present in the cache, the prefetch instruction causes the computer system to retrieve the data associated with that address from main memory and place them in the cache. In the prior art, prefetch instructions have been used to transfer data one line at a time from main memory into the cache.

Some prior art cache systems using prefetch instructions have also used transfer queues. When a prefetch instruction is executed and it is determined that the data are not already in the cache, the address of the missing data is placed in the transfer queue, which is accessed by a cache controller to transfer the data from the main memory to the cache without requiring processor involvement. In this way, the prefetch transfer does not occupy the processor and delay program execution.

When data are retrieved from main memory into cache memory, room must be made for the new entry by casting out old entries. In the prior art, cache units have used "victim caches" to buffer entries evicted from the cache memory before they are written back to main memory or overwritten. In order to make full use of these victim caches as cache memory space, prior art cache units have performed separate searches of the victim cache to determine if the requested data are located in the victim cache. If the data are located therein, the data will have to be exchanged back into the primary cache memory before they can be retrieved by the processor. All of these operations take time and can retard cache performance. Prior art caches have also used write buffers.

Another issue in prior art caches has been the desire to accommodate concurrent searching of cache address tags in connection with two different operations. For example, the processor may be requesting a cache memory access of one address while the cache controller is searching cache memory in connection with a prefetch operation. Prior art systems have answered this need with dual-ported memory cells. The problem with dual-ported memory is that it is extremely expensive in terms of transistor allocation and chip area.

### SUMMARY OF THE INVENTION

According to the present invention, a novel cache architecture and method of using the same are disclosed. The features of the present invention are described with reference to a single cache system comprising all the elements considered to be novel. However, one skilled in the art will recognize that any of the novel features can be adopted without necessitating the adoption of the other features.

The cache architecture of the present invention makes use of a cache memory address unit, separate from the processor, that manages many aspects of address interface between the processor and cache. This autonomous address unit has its own independent bus connecting it to various address portions of the cache unit, so that it is able to support address snoop operations and other operations as needed by the cache without requiring the use of the processor-cache address bus.

Another aspect of the present invention deals with prefetching data into a cache. The single-line prefetch used in the prior art may not appreciably enhance cache performance when the program being executed exhibits certain characteristics. For example, digital signal processors (DSPs), which are used in a variety of applications from modems to automobile control circuits, tend to spend a great deal of operating time repeatedly executing a small number of instructions on a large volume of data. This means that DSPs are repeatedly and rapidly accessing memory in order to retrieve the next operand. Further, temporal locality of data reference in DSPs tends to be very low. For these reasons, DSPs in the prior art have generally not used caches. However, spatial locality of data reference in DSP applications tends to be quite high, so that prefetching large amounts of contiguous data from memory into a cache could save main memory access time.

For these reasons, a multiple line cache prefetch instruction is provided. In order to import large blocks (multiple lines) of data from main memory into cache memory, a NON-BLOCKING LOAD instruction according to the present invention specifies a range of addresses to be moved into cache memory for imminent access by the processor. The NON-BLOCKING LOAD instruction causes the cache unit (or some other system element operating independent of processor control) to snoop into the cache memory and see which, if any, of the data associated with the requested addresses are already located in cache memory. To the extent needed, the cache unit can then retrieve the missing data from main memory without ever interrupting processor operation. By strategically placing such instructions throughout the executable code, a system programmer can insure that large blocks of data likely to be requested by the processor are already in the cache when the requests come.

Another aspect of the present invention is a novel transfer queue that can be beneficially used in conjunction with the multiple line prefetch instruction. With prior art transfer queues, it can sometime happen that the main program execution gets ahead of the cache prefetch execution. When this happens, the data associated with a particular address are requested for use in program execution before they have been retrieved into the cache from main memory. At that time, a cache miss occurs and a main memory access must be performed by the processor. A problem arises in that the transfer queue still contains the requested address, even though the data associated with that requested address no longer need to be transferred to the cache. A similar problem is caused when prior art transfer queues receive a requested address that has already been placed in transfer queue by a prior prefetch operation. Such spurious and duplicative main memory accesses retard performance of the cache system.

In order to avoid these spurious or duplicative main memory accesses, the transfer queue used in the cache architecture disclosed herein is associative. The associativity of the transfer queue allows the cache unit to snoop into the transfer queue to see what addresses have already been queued up. Using this feature, duplicative requests for data can be avoided and requests for data that no longer need to be prefetched can be cancelled.

A novel NON-BLOCKING WRITEBACK instruction is also disclosed. The NON-BLOCKING WRITEBACK instruction causes the cache unit to free up cache memory in order to make room for newer data. The instruction can be used to prospectively writeback one or more lines of cache memory space. By performing a writeback operation in advance of when the cache memory space is actually needed, the instruction avoids the necessity of stalling processor execution to free up room in the cache.

Another feature of the present cache architecture is an aging/write buffer that is used to buffer evictions from the cache memory before they are written back to main memory. As entries are evicted from the cache memory, they can be shuttled into the aging/write buffer where they remain until they can be written back to main memory (if necessary) and then overwritten by a newer eviction. The aging/write buffer is made fully associative so that it can be searched concurrently with the primary cache memory during a load or prefetch operation, thereby expanding the effective size of the cache memory. The full associativity of the aging/write buffer is also beneficial to cache dynamics in that it balances the lower associativity (i.e., direct mapping or 2-way set associativity) of the primary part of cache memory. In this way, the overall hit ratio of the cache can be improved. Finally, when an entry in the aging/write buffer must be overwritten in order to make room for a new cache memory eviction, the present cache architecture provides a mechanism for deciding which entry should be overwritten, and thereby does not force the overwriting of an entry that is still potentially useful.

Another aspect of the cache architecture of the present invention is the use of interleaved address tags for cache memory entries. In accordance with the present invention, multiple simultaneous searches of the cache address tags can be accommodated by dividing the tags into tag blocks. Simultaneous searching for multiple addresses is accomplished by controlling a plurality of multiplexors in such a way as to selectively route the multiple address sources to different ones of the tag blocks. In this way, the throughput rate of cache operations can be increased. Strict coherency is enforced by comparing addresses when the same block is accessed by CPU and a snoop, and stalling off the CPU if the addresses match. If the address doesn't match the CPU is given priority.

### BRIEF DESCRIPTION OF THE DRAWINGS

FIGURE 1 is a general overview of a computer system employing the cache architecture of the present invention.

FIGURE 2 is a block diagram of the cache architecture of the present invention.

FIGURE 3A shows an exemplary instruction format for a NON-BLOCKING load instruction according to the present invention employing an indirect-to-register addressing mode.

FIGURE 3B shows an exemplary instruction format for a NON-BLOCKING LOAD instruction of the present invention employing an immediate addressing mode.

FIGURE 4 shows the flowchart for a cache access during execution of a NON-BLOCKING LOAD instruction according to the present invention.

FIGURE 5 shows a schematic diagram of a transfer queue according to the present invention.

FIGURE 6 shows a flowchart for a cache access during execution of a normal memory load instruction according to the present invention.

FIGURE 7A shows an exemplary instruction format for a NON-BLOCKING WRITEBACK instruction employing an indirect-to-register addressing mode.

FIGURE 7B shows an exemplary instruction format for a NON-BLOCKING WRITEBACK instruction of the present invention employing an immediate addressing mode.

FIGURE 8 shows a flowchart for a cache access during execution of a NON-BLOCKING WRITEBACK instruction according to the present invention.

FIGURE 9 shows a schematic diagram of an aging/write buffer according to the present invention.

FIGURE 10 shows a schematic diagram of circuitry which employs cache address tag interleaving according to the present invention.

FIGURE 11 shows an address format for the computer system.

FIGURE 12 shows the tag and data block interleaving scheme of the present invention.

### DETAILED DESCRIPTION OF A PREFERRED EMBODIMENT

The features of the present invention may be fully understood with reference to the following discussion. In all cases, it should be understood that the following description is made with reference to exemplary embodiments. These embodiments are not intended to limit the scope of the invention as defined by the claims. Variations and modifications to the specific embodiments described herein will be apparent to those skilled in the art.

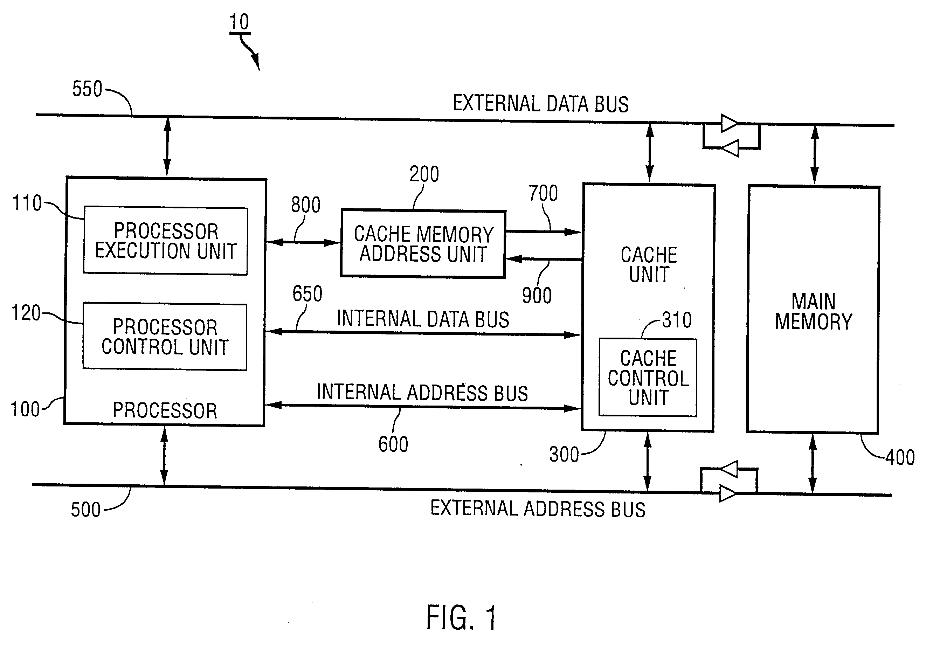

Figure 1 provides a general system overview showing the pertinent features of a computer system 10 utilizing the cache architecture of the present invention. Processor 100, which may be a microprocessor, a digital signal processor or some other type of processor, executes a sequence of instructions in processor execution unit 110 in order to manipulate data operands. The instructions and data used by processor 100 are normally stored in main memory 400, and may be retrieved by processor control unit 120 of processor 100 as needed during execution.

External data bus 550 and external address bus 500 are shown connecting all of the pertinent system components. During normal, non-ache operations of computer system 10, processor control unit 120 controls external address bus 500 and external data bus 550 so as to read data and instructions from main memory 400, or to write the data and instructions back to main memory 400. According to one embodiment, external busses 500, 550 are iapx486 compatible busses with burst mode accesses to support features of static column DRAM main memory 400. There are numerous other ways of implementing such busses that are well known to those skilled in the art.

Interposed between processor 100 and main memory 400 is cache unit 300. As is known by those skilled in the art, cache unit 300 preferably comprises a small, fast memory that acts as a fast-access buffer between processor 100 and main memory 400. Although the disclosure herein is phrased in terms of a "cache memory" and a "main memory," those skilled in the art will recognize that many of the inventive aspects are equally applicable to other multi-level memory structures. For example, in some such structures, data in the multiple levels are stored in different word widths (e.g., 8-bits per word in an on-chip memory structure and 32-bits per word in the off-chip memory). In such situations, multiple accesses are required in order to import a single word from the second memory into the first memory. These multiple accesses slow the effective speed of accesses to the second memory, even if the two memories are constructed of exactly the same components. Such memory structures are generically referred to as having a first "high-bandwidth memory" (e.g., cache memory) and a second "low band-width memory" (e.g., main memory).

In Figure 1, cache unit 300 is shown as a unitary component used for both instruction and data caching. This type of architecture is consistent with a "Princeton-class" architecture, in which there is a single communications path used for both instructions and data. However, those skilled in the art will recognize that the inventive features of the present architecture may be beneficially applied to a "Harvard-class" machine, in which there are separate and parallel paths (and caches) used for instructions and data.

Cache unit 300 communicates with processor 100 and main memory 400 by way of the system external address bus 500 and external data bus 550. Cache unit 300 also communicates directly with processor 100 via internal address bus 600 and internal data bus 650. Internal address bus 600 and internal data bus 650 are fast busses that aid in the speedy communication of information between processor 100 and cache unit 300. A cache control unit 310 provides control signals and processing needed for cache operations.

Cache memory address unit 200 is shown interposed between processor 100 and cache unit 300. Cache memory address unit 200 is a component of computer system 10 that performs address generating operations independent of processor 100 involvement. In this way, cache memory address unit 200 supports many of the novel functions and features of cache unit 300, as set out below. Cache memory address unit 200 communicates with processor 100 via an instruction and base address register bus 800 and with cache unit 300 via a dedicated special purpose address bus 700. CMAU control line 900 provides a path for control information to be passed from cache unit 300 to cache memory address unit 200. Although cache memory address unit 200 is shown separately from cache unit 300 in this embodiment, those elements might alternatively be consolidated and still perform the functions of the present invention.

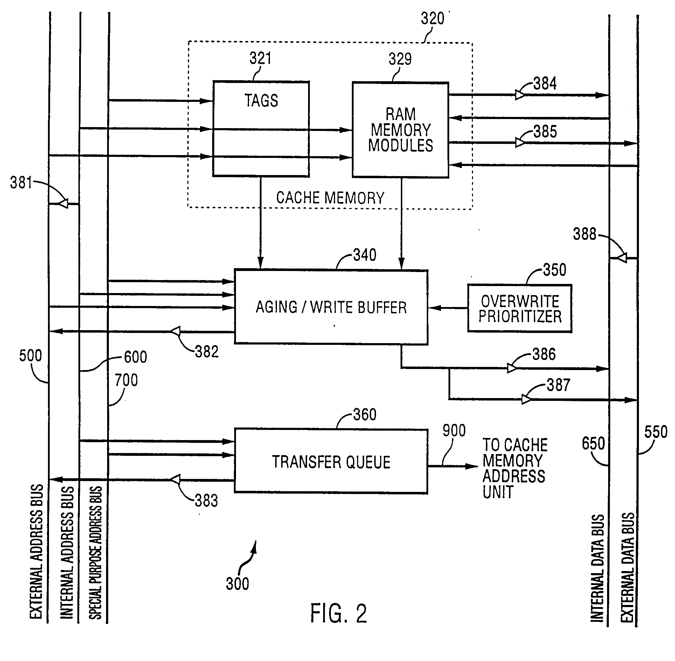

Now, with reference to Figure 2, the architecture and function of cache unit 300 is described in greater detail. External address bus 500 and external data bus 550 are shown in Figure 2, with their respective connections to processor 100 and main memory 400 being shown in Figure 1. Likewise, internal address bus 600 and internal data bus 650 are shown in Figure 2, with their respective connections to processor 100 being shown in Figure 1. Special purpose address bus 700 is shown in Figure 2, with its connection to cache memory address unit 200 being shown in Figure 1.

Cache unit 300 comprises cache memory 320, aging/write buffer 340, overwrite prioritizer 350, and transfer queue 360. Cache memory 320 comprises a plurality of memory modules 329 capable of storing "lines" of data. According to one embodiment, a line of data is 16 bytes of data. Cache memory 320 also comprises a plurality of cache tags 321 that specify a part of the virtual address of data stored in cache memory 320. In one embodiment, cache memory 320 contains 8 kbytes of direct mapped or two-way set associative words. In another embodiment, an 8 kbyte data cache is used in parallel with a 4 kbyte instruction cache.

According to one embodiment, each tag 321 in cache memory 320 identifies multiple data words. This is accomplished by making the length of tag 321 less than the full length of a standard address used in computer system 10. For example, the lower bits of a standard address may be omitted from tag 321, thus enlarging the number of unique data words identified by tag 321. This scheme is known as "set associativity" and is commonly used in cache architectures.

In operation, processor 100 executes a sequence of instructions, known as a program, that cause processor 100 selectively to retrieve and manipulate data from memory and then selectively write data back to memory or perform other functions with the data. When the execution of an instruction requires processor 100 to retrieve data from memory, a data request is sent out from processor 100 to cache unit 300, specifying the address of data to be retrieved. This address is conveyed to cache unit 300 by way of internal address bus 600. Upon receipt of the address by cache unit 300, tags 321 are snooped to determine whether the data associated with the requested address are already stored in one of the memory modules 329 of cache memory 320. If the data are in a memory module 329, then cache unit 300 retrieves the data from cache memory 320 and places them on internal data bus 650, from which they can be accessed by processor 100. This operation is accomplished in part by controlling transfer enable mechanism 384.

If, on the other hand, the data associated with the requested address are not present in a memory module 329 of cache memory 320, the data must be retrieved from main memory 400. This retrieval is accomplished in part by controlling transfer enable mechanism 381, which allows the requested address to be transferred from internal address bus 600 to external address bus 500, where the address can be accessed by main memory 400. Main memory 400 then retrieves the data associated with the requested address and places them on external data bus 550. From there, the data associated with the requested address can be retrieved by processor 100 for use in execution of its program. The data can also be retrieved by cache unit 300 and stored in cache memory 320 by way of transfer enable mechanism 388.

Those skilled in the art will recognize that there are various other ways of operating a multi-level memory hierarchy for practicing the present invention.

As discussed above, the hit ratio of a cache system is an important performance criterion. In order to maximize the hit ratio according to the present invention, a programmer of processor 100 can make use of a novel multi-line cache prefetch instruction. A programmer can anticipate the data needs of processor 100 as it executes its programmed functions. With this information, the programmer can strategically place multi-line cache prefetch instructions in the executable program and thereby cause cache unit 300 to prefetch into cache memory 320 data that will be requested imminently by processor 100.

Such a multi-line cache prefetch instruction can be referred to as a "NON-BLOCKING LOAD" instruction, because it tests for the presence of data and requests a memory transfer without interrupting, or "blocking," execution of the program being executed on processor 100. This nonblocking capability can be further exploited by allowing the processor to continue execution on a cache miss. These instructions executed after the miss are said to have been "speculatively executed" because their execution may have to be invalidated if the cache miss causes an exception.

Although the term "programmer" or "system programmer" is used herein, no limitation to human programmer is intended. Automated programming may be used to strategically insert NON-BLOCKING LOAD instructions in the processor program. For example, a high-level language compiler may be used to insert machine-readable instructions into executable code.

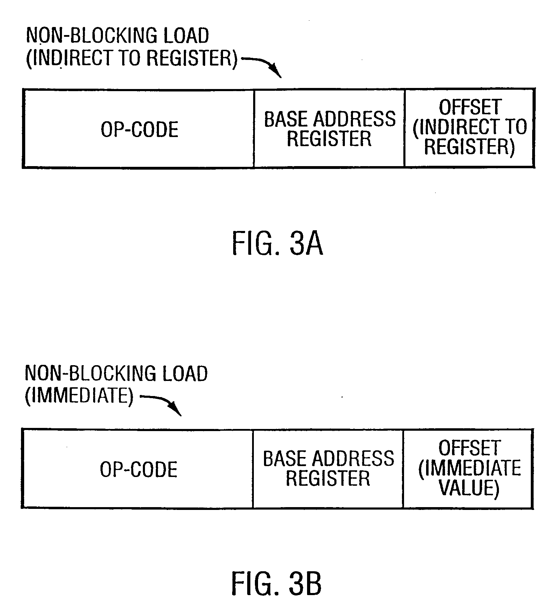

Figures 3A and 3B show exemplary NON-BLOCKING LOAD instruction formats that can be executed in processor 100 to accomplish a multi-line cache prefetch operation according to the present invention. According to the format shown in Figure 3A, the instruction comprises an op-code (e.g., 16 bits), an offset specified indirectly by an address register (e.g, 8 bits), and a base address register field (e.g., 8 bits), which identifies a register where a base address is specified. According to the format shown in Figure 3B, the instruction comprises an op-code (e.g., 16 bits), an immediate value offset (e.g., 8 bits), and a base address register field (e.g., 8 bits). According to either format, a range of addresses to be prefetched is specified by the combination of a base address and an offset. An offset can be specified in the positive or negative direction.

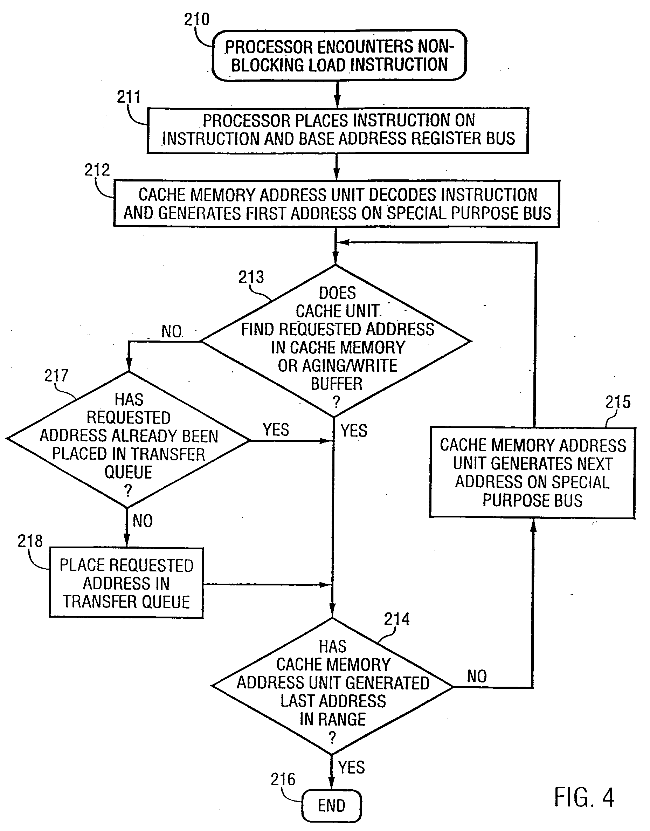

In operation, the NON-BLOCKING LOAD instructions are executed by the processor execution unit 110 according to the flow chart shown in Figure 4. The flow chart in effect represents various actions taken in response to this instruction execution, and these actions are controlled in part by control logic of the processor control unit 120 and control logic of the cache memory address unit 200 and cache unit 300. This control logic may be of conventional construction, such as microcode ROMs and microsequencers, state machines, programmable logic arrays, logic gates, and the like. In one form of construction, for example, the cache unit 300 includes a separate control unit 310 which is, for example, a micro-controlled control unit or state machine.

When processor 100 encounters a NON-BLOCKING LOAD instruction (box 210), it responds by issuing to cache memory address unit 200, a load instruction to transfer the specified multiple lines of memory into the cache memory 320 (box 211). Cache memory address unit 200 receives this instruction via instruction and base address register bus 800. In response, cache memory address unit 200 decodes the instruction op-code, serially generates the requested addresses, and provides those addresses, one at a time, to cache unit 300 via special purpose bus 700 (boxes 212 and 215). For each requested address, cache unit 300 snoops tags 321 of cache memory 320 to determine whether the requested data are already present in cache memory 320 (box 213). As is discussed below, cache unit 300 can also snoop aging/write buffer 340 simultaneously. If the snooping indicates that the data associated with the requested address are already present in cache memory 320 or aging/write buffer 340, then cache unit 300 takes no further action with respect to that address. At this point, cache memory address unit 200 generates the next address in the specified range (box 215) if there is such (box 214), and otherwise, ends operation on that NON-BLOCKING LOAD (box 216).

If, on the other hand, the requested data are not already present in cache memory 320, cache unit 300 detects this and responds by placing the address of the missing data in transfer queue 360 (box 218). As will be described below, cache unit 300 also snoops transfer queue 360 to see if the requested addresses have already been queued up for prefetch (box 217). If so, there is no need to place the addresses in transfer queue 360 again. CMAU control line 900 can be used by cache unit 300 for handshaking and/or to indicate to cache memory address unit 200 that transfer queue 360 is full. When transfer queue 360 is full, cache memory address unit 200 may buffer or simply ignore all pending prefetch operations.

As is shown in Figure 4, the process of generating an address, snooping the cache memory, and responding accordingly continues repeatedly until cache memory address unit 200 has generated the last address in the range specified by the NON-BLOCKING LOAD instruction (box 214). At that point (box 216), cache memory address unit can begin execution of the next NON-BLOCKING LOAD or NON-BLOCKING WRITEBACK instruction pending. Cache memory address unit 200 is preferably capable of buffering multiple pending NON-BLOCKING LOAD or NON-BLOCKING WRITEBACK instructions fed to it by processor 100. This way, processor 100 does not need to stall its operation simply because cache memory address unit 200 is busy.

Returning for a moment to Figure 2, additional functions of the transfer queue 360 will be described. After an address is placed in transfer queue 360, cache unit 300 then causes the addresses in transfer queue 360 to be placed on external address bus 500 via transfer control mechanism 383, and coordinates a main memory access in which the missing data are retrieved into cache memory without processor involvement. In this way, the chance that data requested by processor 100 can be retrieved from cache memory 320 without accessing main memory 400 is increased, and memory access time is thereby minimized.

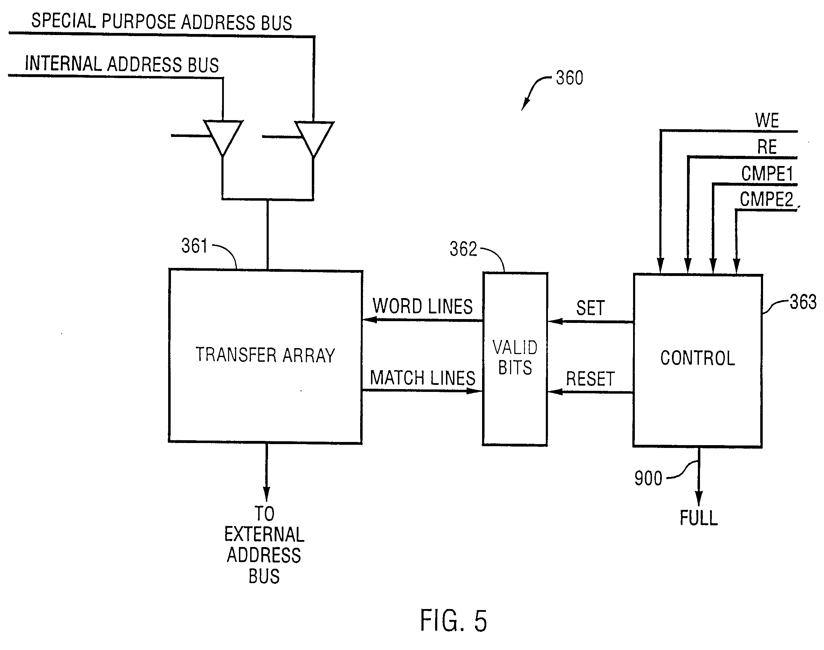

Figure 5 shows an exemplary embodiment of transfer queue 360. Transfer queue 360 comprises transfer array 361 for storing a plurality of addresses of data to be retrieved from main memory 400 in the manner described above. A valid bit 362 is associated with each address. Control block 363 manages some functions of transfer queue 360, including producing a "full" signal 900 when transfer queue 360 is full. Both internal address bus 600 and special purpose address bus 700 can access transfer array 361 so as to fully support the features described herein. In one embodiment, transfer array is a CAM/RAM array with 8 address entries, each 22 bits in size.

Transfer queue 360 is preferably a fully associative address queue. The associativity adds several beneficial capabilities. Specifically, making transfer queue 360 associative allows cache unit 300 to snoop transfer queue 360 for each address in a range of addresses to be prefetched. If a requested address has already been placed into transfer queue 360 in response to a previous NON-BLOCKING LOAD instruction, then cache unit 300 need not re-queue the requested address. Another benefit of the associativity of transfer queue 360 is that a requested address that has been queued up for a memory prefetch operation can be deleted from transfer queue 360 if processor 100 issues an actual data request for the data before they can be prefetched into cache memory 320 (i.e., a miss occurs). In this event, cache unit 300 has the ability to delete the requested address from the transfer queue 360 in order to avoid duplicative main memory accesses.

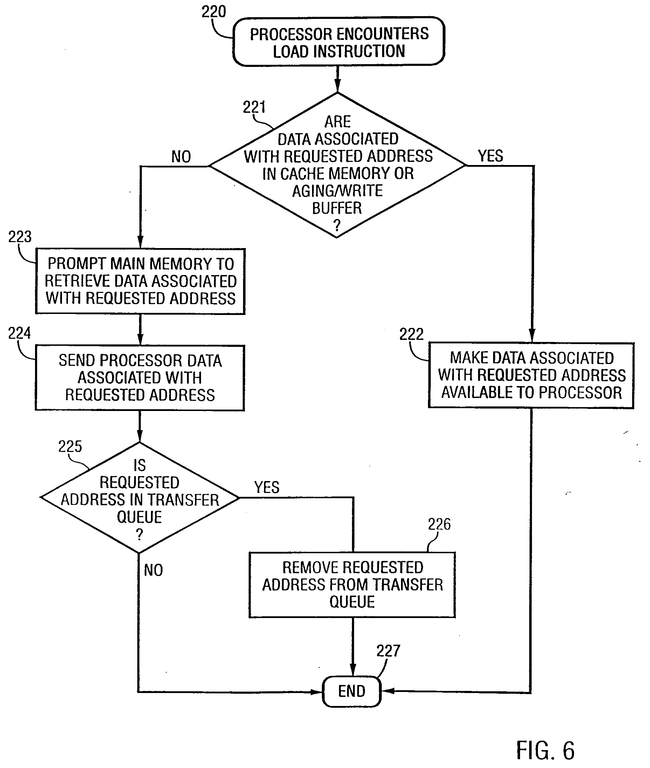

Figure 6 shows a flow chart of the execution of a load instruction in processor 100. Processor 100 places the requested address on internal address bus 600 (box 220) and prompts cache unit 300 to snoop tags 321 to see if the data associated with the requested address are present in cache memory 320 or the aging/write buffer 340 (box 221). If the data are present, cache unit 300 sends the data to the processor 100 via internal data bus 650 (box 222). If, on the other hand, the data associated with the requested address are missing, cache unit 300 immediately transfers the requested address to external address bus 500 for retrieval from main memory 400, so that the main memory will send the data to the processor 100 (box 223 and 224). At the same time, transfer queue 360 is snooped to determine whether the address of the requested data has been placed in transfer queue 360 in response to a previous NON-BLOCKING LOAD instruction (box 225). If so, the address is deleted from transfer queue 360 (box 226). In this way, tardy prefetch operations can be avoided when they are no longer necessary or useful. The operation of snooping transfer queue 360 and deleting unneeded address requests can be executed in parallel with the snooping of tags 321, or it can be accomplished after a main memory access. This concludes operation on a load instruction (box 227).

According to another aspect of the present invention, a NON-BLOCKING WRITEBACK instruction is provided for updating main memory 400 from cache memory. The NON-BLOCKING WRITEBACK instruction allows a system programmer to strategically insert throughout a program instructions that will prospectively free up space in the cache before that space is actually needed. This operation is accomplished independent of processor control. In this way, the processor does not stall to service a writeback operation during program execution. In one mode of operation, a NON-BLOCKING WRITEBACK instruction may be issued closely before a NON-BLOCKING LOAD instruction. In this way, cache memory space may be prospectively freed up before it is again filled with useful data.

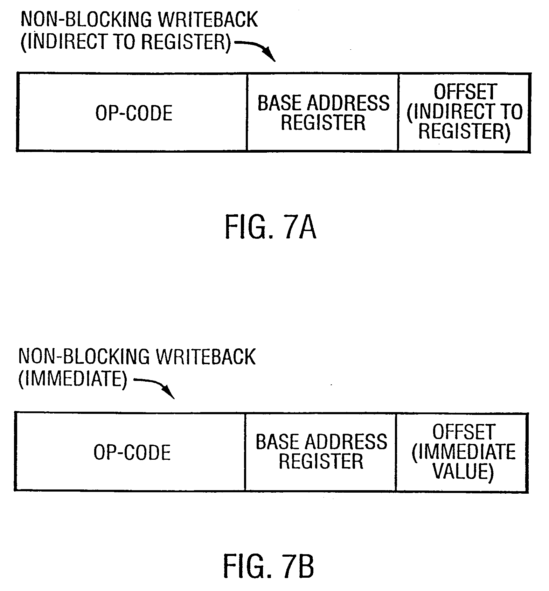

Figures 7A and 7B show two possible instruction formats for a NON-BLOCKING WRITEBACK instruction. The format shown in Figure 7A comprises an op-code (e.g., 16 bits), a base address register field (e.g., 8 bits), which identifies a register where a base address is specified, and an offset specified in a register (e.g., 8 bits). According to the format shown in Figure 7B, the instruction comprises an op-code (e.g., 16 bits), a base address register field (e.g., 8 bits), and an immediate value offset (e.g., 8 bits). In either way, a range of addresses to be written from cache memory back to main memory can be specified. An offset can be specified in either a positive or negative direction. Alternatively, the NON-BLOCKING WRITEBACK instruction may specify only a single address to be written back. There are other ways of specifying a group of data to be written back that will be apparent to those skilled in the art.

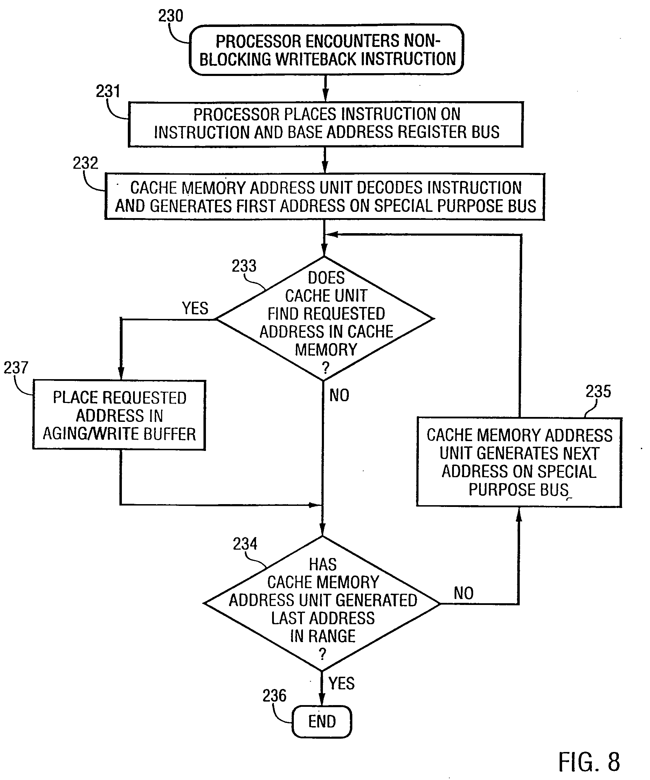

In operation, the NON-BLOCKING WRITEBACK instruction works according to the flowchart shown in Figure 8. When processor 100 encounters a NON-BLOCKING WRITEBACK instruction (box 230), it issues the instruction to cache memory address unit 200 via instruction and base address register bus 800 (box 231). Cache memory address unit 200 decodes the op-code to determine how the range of addresses to be written back is specified (box 232). Cache memory address unit 200 then serially generates the addresses of data to be written back. The addresses are conveyed, one at a time, to cache unit 300 via special purpose address bus 700.

In response to each address generated on special purpose address bus 700, cache unit 300 snoops tags 321 to determine whether the specified data are presently stored in cache memory 320 (box 233). If the data associated with the specified address are not in cache memory 320, then cache unit 300 takes no further action with respect to that address. At this point, cache memory address unit generates the next address in the specified range (box 235) if there is such (box 234), and otherwise, ends operation on that NON-BLOCKING WRITEBACK (box 236). If, on the other hand, the specified address is located in cache memory 320 and the data need to be written back to main memory 400, cache unit 300 detects this and responds by placing the requested address and associated data into aging/write buffer 340 (box 237), from which the data will, in time, be written back to main memory 400.

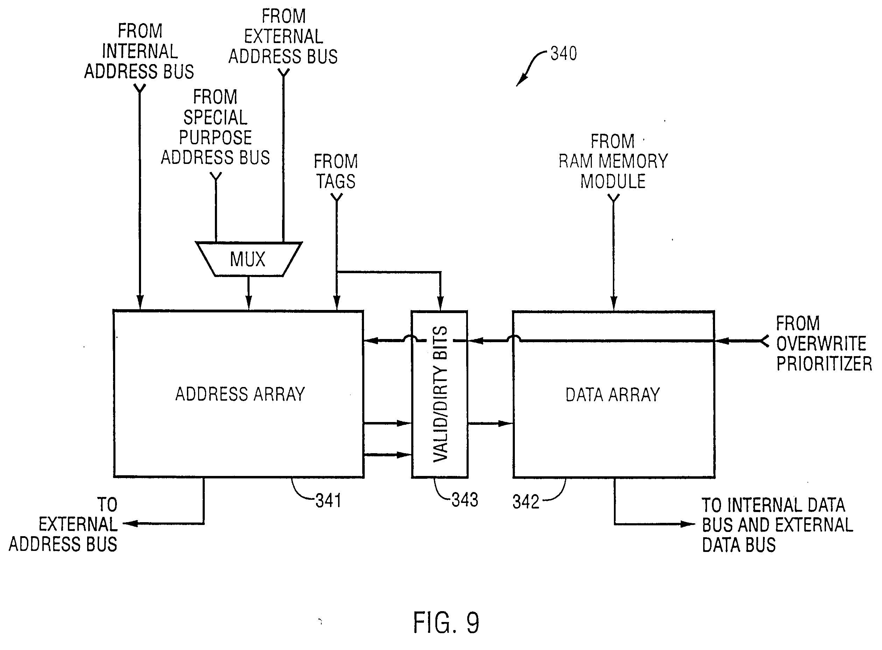

According to the present invention, aging/write buffer 340 serves as a temporary buffer for cache entries that have been evicted from cache memory 320 before they are written back to main memory 400. Details of an exemplary implementation of aging/write buffer 340 are given in Figure 9. The aging/write buffer 340 has 36 entries for storing data associated with 24-bit addresses. A 20-bit address array 341 associates an address with each cache line stored in data array 342. The remaining 4 address bits specify a data word and a particular byte therein. A valid bit and a dirty bit 343 are associated with each entry. Data from overwrite prioritizer 350 are coupled with entries as required to specify the next entry to be overwritten. Before a "dirty" entry can be overwritten, it must be written out to memory.

Address array 341 can be a 2-port CAM array with a 20-bit width. Valid/dirty bits 343 are "hidden" bits in that they are available only for use by the cache controller. There is preferably one valid bit and one dirty bit per line available in aging/write buffer 340. Data array 342 is, in one embodiment, 128 bits wide, which amounts to 4 data words. Connections to address and data busses are used in executing the operations discussed herein. Connections between tags 321 and address array 341, and RAM memory module 329 and data array 342 are provided.

Aging/write buffer 340 is an associative memory, so it can be snooped in parallel with cache memory 320 when a load instruction (normal or non-blocking) is being serviced. If the data associated with a requested address are in aging/write buffer 340, the data can be read directly from aging/write buffer 340 via transfer control mechanism 386. In this way, data that have been evicted from cache memory 320, but have not yet been overwritten or written back to main memory 400, may still be retrieved if needed. This approach also avoids the need to separately interrogate a "victim cache," as used in the prior art, to see if requested addresses are cached therein. Likewise, it is unnecessary to copy an entry back to cache memory 320 before reading it.

A preferred feature of aging/write buffer 340 is that it is fully associative (as opposed to the direct mapping or set associativity of cache memory 320). This aspect will lead in many cases to a higher overall hit ratio for cache unit 300, because an entry being placed into such a buffer can be placed in any free memory location, without the necessity of overwriting any data other than that which is intended to be replaced.

There are various ways to managing space in aging/write buffer 340. For example, it may be desirable to always keep a few (e.g., four) lines of memory in a "clean" state so that they may be overwritten without first performing a writeback operation. In this case, the cache controller will cause "dirty" entries to be written back to main memory 400 before the space in aging/write buffer 340 is actually needed. This may be done, for example, by identifying the three least recently used locations and writing the data associated with these locations back to main memory 400 if they are dirty.

When it is time to overwrite an entry in aging/write buffer 340 (either because of a new eviction from cache memory 320 or to prospectively "clean" a line), an algorithm is required to determine what entry will be overwritten. Overwrite prioritizer 350 is provided in communication with aging/write buffer 340 for this purpose. According to one embodiment of the present invention, overwrite prioritizer implements a random number algorithm to randomly choose the next entry in aging/write buffer 340 to be overwritten. This may be done, for example, with a ring counter or other kind of pseudo-random number generator. Another possible embodiment implements a first-in/first-out algorithm. Yet another embodiment implements a least-recently-used (LRU) algorithm using a time stamp stored in a buffer associated with each entry in aging/write buffer 340. According to another embodiment, overwrite prioritizer implements a pseudo-LRU algorithm using a binary tree structure, in which a data structure is sub-divided into progressively smaller sections. Each bit of an identifier code is then used to specify with greater particularity the section most recently accessed. Regardless of the method used, the data stored in overwrite prioritizer 350 must be updated periodically, for example after each read is serviced from aging/write buffer 340.

Finally, with respect to cache memory 320 and aging/write buffer 340, there is an issue of cache coherency, which can be handled in a number of known ways. According to one embodiment, data are maintained for each cache entry (whether in cache memory 320 or aging/write buffer 340) that indicate whether the entry is "dirty," i.e. whether it has been written to by processor 100 since it was imported into cache unit 300 from main memory 400. A "dirty" entry must be copied back to main memory 400 before it can be overwritten. This is accomplished via the transfer control mechanism 387 shown in Figure 2. According to another embodiment, known as a "write through" scheme, no copyback step is required because all write instructions issued by processor 100 will be executed simultaneously in cache memory 320 and in main memory 400. In this embodiment, no "dirty" indicator is required because the cache entries are always the same as main memory entries.

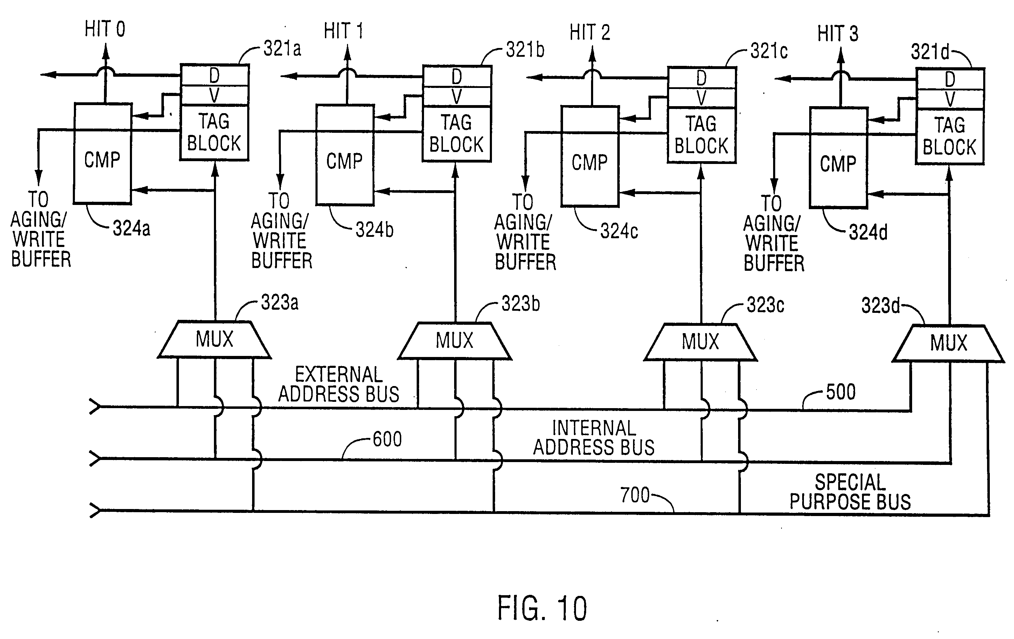

According to another aspect of the present invention, address tags 321 are interleaved to allow simultaneous searching for multiple requested addresses needed in connection with different operations (e.g., concurrent searches in response to a load instruction by processor 100 and a prefetch operation by cache memory address unit 200). This scheme is illustrated in Figure 10. The interleaving is accomplished by dividing the tags 321 into discrete tag blocks 321a-321d. Each of the tag blocks 321a-321d is associated with a different range of non-overlapping address space as will be described below, along with a valid bit that indicates whether the entry is being used or not, and dirty bits for a copy back cache. Each of the tag blocks 321a-321d is associated with one of address multiplexors 323a-323d. Each of the multiplexors 323a-323d are connected to each of the three address busses used in cache unit 300, i.e., external address bus 500, internal address bus 600, and special purpose address bus 700. Multiplexors 323a-323d are operated by control logic in cache unit 300 to select which of the three addresses will be applied to which of tag blocks 321a-321d.

The control logic responsible for selectively routing the various addresses to the tag blocks 321a-321d operates on the basis of system priorities, for example, to avoid collisions and decide what access request takes priority for each of the tag blocks 321a-321d. To allow processor 100 to almost always have access to cache unit 300 (even when a snoop is pending in the same tag block), the indexes of two addresses attempting to access the same one of tag blocks 321a-321d can be compared. If the address indexes do not match, which means the snoop is not modifying the location being accessed by processor 100, processor 100 is given priority and the snoop is stalled. If, on the other hand, the address indexes do match, processor 100 is preferably stalled for one clock and the snoop (whether a snoop read or a snoop write) is allowed to proceed first in order to guarantee strict coherency. Various modifications and enhancements on this basic scheme are possible. For example, a counter may be used to keep track of the number of times that a processor access is stalled in order to allow a snoop access to proceed in the same tag block. If this number exceeds some threshold, the control logic can force the next snoop access to be stalled so that the processor access can finally be serviced.

Comparators 324a-324d perform a comparison operation to determine whether a cache "hit" or "miss" has occurred in each block. The result of this operation is then used by cache control unit 310 in further cache operations. The addresses forwarded to each block can also be routed simultaneously to aging/write buffer 340 for snooping there in parallel with searches of tags 321. In this way, multiple simultaneous tag accesses can be accommodated with inexpensive memory cells (e.g., standard six-transistor cells, rather than more expensive dual-ported cells).

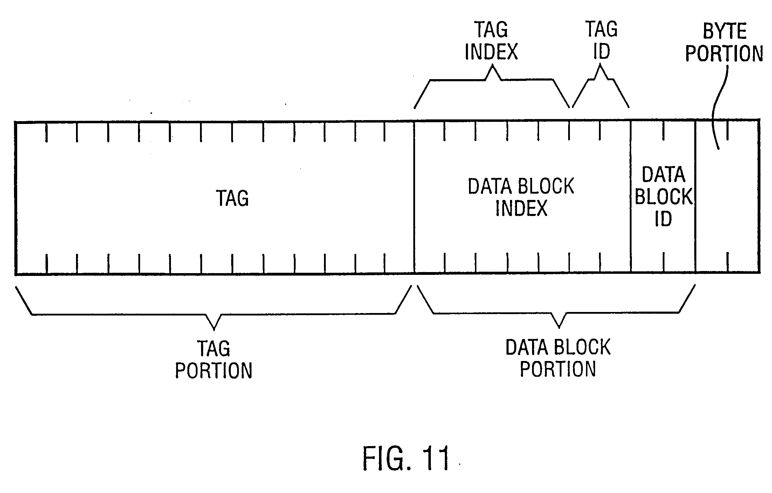

This interleaving scheme for tags 321 can be implemented alone, or can be coupled with a further interleaving of data blocks as shown in Figure 11. A 24-bit address format for computer system 10 is shown having a tag portion, a data portion and a byte portion. The byte portion contains 2 bits. The tag portion comprises a tag. The data portion comprises a data block identifier (2 bits) and a data block index (7 bits). In addition, a tag block identifier (2 bits) and a tag index (5 bits) are interleaved over at least some of the same bits used for the data block portion. The 2-bit tag identifier represents the four-way tag interleaving scheme discussed above, with reference to Figure 10. Each of the four combinations of the two bits of the two-bit tag identifier identifies a respective one of the tag blocks (321a-321b in Figure 10) that may possibly contain the 24-bit address comprised of the tag identifier.

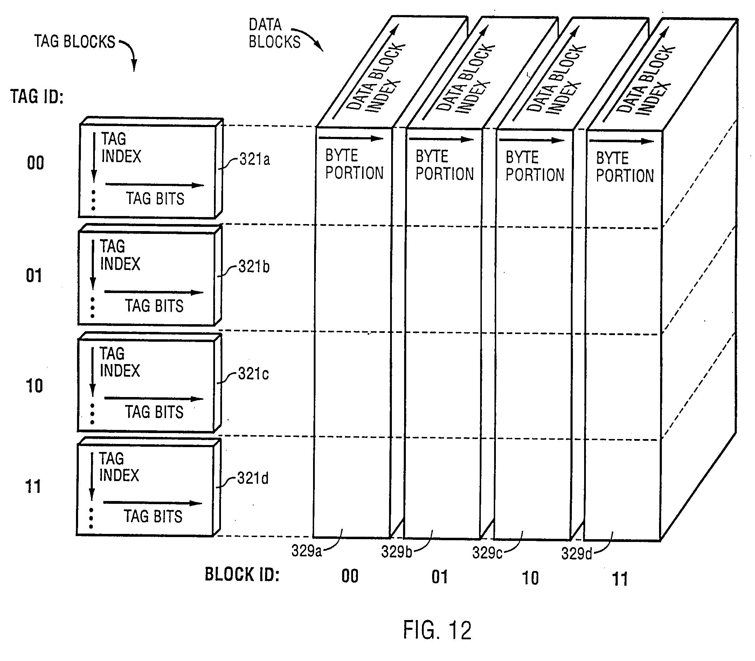

Figure 12 illustrates how this dual interleaving scheme maps addresses to memory locations in the RAM memory modules 329. RAM memory modules 329 are organized into data blocks 329a-329d in the same manner as the tag blocks 321a-321d are. Each data block and tag block shown is identified by its unique data block identifier or tag block identifier, respectively. The tag index and data block index represent an offset into the each tag block or data block, respectively. The 2-bit byte identifier specifies a particular byte in the data block width. This arrangement is particularly useful for supporting memory accesses not aligned on word boundaries. Two contiguous memory modules can be accessed and data across the two can be outputed. When an access crosses a line boundary, two contiguous tag blocks can be accessed, one for each line.

It should be noted that the objects and advantages of the invention may be attained by means of any compatible combination(s) particularly pointed out in the items of the following summary of the invention and the appended claims.

### SUMMARY OF INVENTION

1. A cache system, for use with a processor and a main memory, said cache system comprising:
   (a) a cache memory address unit having an input address bus connecting said cache memory address unit to said processor for transferring addresses from said processor to said cache memory address unit, and an output address bus;
   (b) cache tag memory connected to said cache memory address unit via said address output bus for receiving addresses from said output address bus;
   (c) cache data memory associated with said cache tag memory so that lines of data in said cache data memory are associated with respective tags stored in said cache tag memory blocks;
   (d) an internal address bus connecting said cache tag memory to said processor so that said processor can address said cache tags;
   (e) an external address bus connecting said cache tag memory to said processor and said main memory so that addresses can be transferred among said cache tag memory, said processor and said main memory;
   (f) a transfer queue connected to said cache memory address unit via said output address bus for receiving addresses from said cache memory address unit; and
   (g) an aging/write buffer connected to said cache memory address unit via said output address bus for providing an address to said aging/write buffer for comparison with entries therein.
2. The cache system wherein said transfer queue is fully associative.
3. The cache system wherein said aging/write buffer is fully associative.
4. The cache system wherein said cache tag memory comprises a plurality of tag memory blocks and tag comparators, each of said tag memory blocks being associated with a respective disjoint set of addresses.
5. The cache system wherein said cache tag memory further comprises an address multiplexor connected to said output bus, said internal address bus, and said external address bus, so that each of said address sources can be independently coupled to a different one of said tag memory blocks.
6. The cache system wherein said cache data memory is subdivided into a plurality of data memory blocks, each having a respective data bus for input and output of data.
7. The cache system wherein said cache tag memory and said cache data memory are each subdivided to provide a data cache and an instruction cache distinct from said data cache.
8. In a computer system having a processor, a cache, and an address bus connecting said processor and said cache for transferring addresses from said processor to said cache, a cache memory address unit comprising:
   (a) an instruction bus distinct from said address bus;
   (b) logic circuitry connected to said processor via said instruction bus, said logic circuitry generating addresses independently of processor control in response to instructions received from said processor; and
   (c) cache output bus connecting said logic circuitry to said cache for conveying said generated addresses to said cache for use in cache operations.
9. In a computer system having a cache memory, an aging/write buffer for buffering data evicted from said cache memory wherein said buffered data may be retrieved directly from said aging/write buffer, said aging/write buffer comprising:
   (a) an address memory array with a plurality of entries;
   (b) a data memory array with one entry corresponding to each of said plurality of entries in said address memory array;
   (c) at least one status bit associated with each of said plurality of entries in said address memory array;
   (d) at least one address bus input and at least one address bus output for conveying address information to and from said aging/write buffer;
   (e) at least one data bus input and at least one data bus output for conveying data to and from said aging/write buffer; and
   (f) means for determining which of said entries will be a next entry to be overwritten.
10. The aging/write buffer wherein said aging/write buffer has a higher degree of associativity than said cache memory.
11. The aging/write buffer wherein said aging/write buffer is fully associative.
12. A method of transferring sequences of data from addresses known in advance in a low-bandwidth memory to a high-bandwidth memory that is accessible by a processor, said method comprising the steps of:
   (a) the processor issuing, to a memory address unit, a multiple-line non-blocking load instruction to transfer a specified portion of data from said low-bandwidth memory to said high-bandwidth memory;
   (b) said memory address unit testing to determine whether some or all of said specified portion of data is already present in the high-bandwidth memory;
   (c) when said testing indicates that all of said specified portion of data is already present in said high-bandwidth memory, then said memory address unit not taking any further action to transfer said specified portion of data;
   (d) when said testing indicates that said specified portion of data is not already present in said high-bandwidth memory, then
      (i) said memory address unit inserting into a transfer queue an identifier that designates at least a part of said specified portion of data to be transferred from said low-bandwidth memory to said high-bandwidth
      (ii) a cache control unit retrieving said identifier and transmitting said designated part of said specified portion of data from said low-bandwidth memory to said high-bandwidth memory.
13. The method wherein said high-bandwidth memory is a cache memory, said low-bandwidth memory is a main memory, said memory address unit is a cache memory address unit.
14. The method wherein said cache memory is a speculative cache memory.
15. The method wherein:
   (a) said specified portion of data is not already present in said cache memory; and
   (b) said processor issues a request for said designated part of said specified portion of data prior to transfer of said designated part to said cache memory.
16. The method wherein:
   (a) said processor issues a memory load instruction to said cache for a memory address that is queued in said transfer queue; and
   (b) control logic (A) receives said memory access instruction, (B) interrogates said transfer queue to determine if said memory address is pending in the transfer queue, and (C) if so, deletes said memory address from the transfer queue.
17. The method wherein (i) said transfer queue is an address queue and (ii) said identifier of said specified portion of data is an address of said specified portion of data.
18. The method wherein said transfer queue is associative.
19. The method wherein (i) a first part of said specified portion of data is not already present in said cache memory and a second part of said specified portion of data is already present in said cache memory, and (ii) said identifier of said specified data portion identifies said first part.
20. The method wherein the processor unit's issuance of a multiple-line non-blocking load instruction is controlled by a machine-readable program of instructions that is generated by a high-level-language compiler.
21. The method further comprising the step, performed prior to step (a) in claim 13, of identifying a block of multiple addresses in said main memory corresponding to data that are desired to be present in said cache memory for future program execution.
22. The method wherein the processor unit's issuance of a multiple-line non-blocking load instruction is controlled by a machine-readable program of instructions that is generated by a high-level-language compiler.
23. The method further comprising the step, performed prior to step (a) in claim 12, of prospectively identifying a sequence of addresses in low-bandwidth memory of data that is desired to be present in the high-bandwidth memory for future program execution.
24. A method of operating a cache memory in conjunction with a processor and a main memory, said method comprising:
   (a) said processor issuing a non-blocking load instruction specifying a range of multiple addresses corresponding to a block of data that are to be transferred from said main memory into said cache memory;
   (b) generating each individual address in said specified range of addresses independent of processor control;
   (c) for each generated address in said specified range of addresses, doing the following independent of processor control,
      (i) determining whether said data corresponding to said generated address are already stored in said cache memory, and if so, taking no further action with respect to transferring that data; and
      (ii) when said data are not already stored in said cache memory, transferring said data corresponding to said generated address from said main memory to said cache memory.
25. The method wherein said step of transferring said data comprises the further step of placing an identifier corresponding to said data into a transfer queue to be transferred at some time in the future.
26. A method of operating a cache memory in conjunction with a processor and a main memory, said method comprising:
   (a) said processor issuing a non-blocking load instruction specifying a multiple-line range of addresses corresponding to data that are to be transferred from said main memory into said cache memory;
   (b) generating each individual address in said specified range of addresses independent of processor control;
   (c) for each generated address in said specified range of addresses, doing the following independent of processor control,
      (i) determining whether said data corresponding to said generated address are already stored in said cache memory, and when said data corresponds to said generated address are already stored in said memory, taking no further action with respect to transferring that data;
      (ii) when said data are not already stored in said cache memory, determining whether said data have already been queued for transfer from said main memory into said cache memory, and when said data have already been queued for transfer from said main memory into said cache memory, taking no further action with respect to transferring that data; and
      (iii) when said data have not already been queued for transfer into said cache memory, placing an identifier corresponding to said data into a transfer queue to be transferred from said main memory to said cache memory.
27. The method wherein (i) said transfer queue is an associative address queue and (ii) said identifier of said specified portion of data is at least a portion of said generated address.
28. A method of operating a computer system having a processor that executes a program, said method comprising:
   (a) identifying a multiple-line range of addresses corresponding to a block of data that is desired to be stored in a cache memory for future use in execution of said program;
   (b) said processor issuing an instruction to transfer said data corresponding to said identified range of addresses from main memory into cache memory; and
   (c) independently of processor control, transferring said data corresponding to said identified range of addresses from main memory to cache memory at a time before said processor requests said data for program execution.
29. The method wherein said step of identifying is performed by a programmable machine.
30. A method of servicing an address request issued to a cache memory system, said address request specifying multiple requested addresses, said method comprising:
   (a) searching for each one of said requested addresses (1) in said cache memory and (2) in an associative address queue; and
   (b) with respect to each one of said requested addresses that is found in neither said cache memory nor said associative address queue, placing that address in said associative address queue and servicing said address request at a later time when said requested address is removed from said associative address queue.
31. A method of data transfer from a high-bandwidth memory to a low-bandwidth memory, said method comprising the steps of:
   (a) a processor issuing, to a memory address unit, a non-blocking writeback instruction to transfer data associated with one or more specified addresses from said high-bandwidth memory to said low-bandwidth memory;
   (b) said memory address unit testing to determine whether said data associated with any of said specified addresses are present in the high-bandwidth memory;
   (c) when said testing indicates that none of said data is present in said high-bandwidth memory, then said memory address unit not taking any further action to transfer said data;
   (d) when said testing indicates that any of said data is present in said high-bandwidth memory, then
      (i) said memory address unit inserting into a buffer at least a part of said data, together with an identifier corresponding to said part, to be transferred from said high-bandwidth memory to said low-bandwidth memory; and
      (ii) control logic retrieving said part of said data and said identifier from said buffer and transferring said part to said low-bandwidth memory to be stored at a location identified by said identifier.
32. The method wherein said high-bandwidth memory is a cache memory, said low-bandwidth memory is a main memory, and said memory access unit is a cache memory access unit.
33. The method wherein said cache memory is a speculative cache memory.
34. The method wherein said buffer is an aging/write buffer.
35. The method wherein said identifier of said part of said data is an address of said data.
36. The method wherein (i) a first portion of said data associated with said specified addresses is present in said cache memory and a second portion of said data is not present in said cache memory, and (ii) said step of inserting is performed on said second portion only.
37. The method wherein the processor unit's issuance of a non-blocking writeback instruction is controlled by a machine-readable program of instructions that is generated by a high-level-language compiler.
38. The method further comprising the step, performed prior to step (a) in claim 32, of prospectively identifying one or more addresses corresponding to data that are desired to be removed from said cache memory because said data are not imminently needed for program execution.
39. The method wherein the processor unit's issuance of a non-blocking load instruction is controlled by a machine-readable program of instructions that is generated by a high-level-language compiler.
40. The method further comprising the step, performed prior to step (a) in claim 31, of prospectively identifying a sequence of addresses in high-bandwidth memory of data that is desired to be removed from said high-bandwidth memory.
41. A method of operating a cache memory in conjunction with a processor and a main memory, said method comprising:
   (a) said processor issuing a non-blocking writeback instruction specifying a range of one or more addresses corresponding to data that are to be transferred from said cache memory to said main memory;
   (b) generating each individual address in said specified range of addresses independent of processor control;
   (c) for each generated address in said specified range of addresses, doing the following independent of processor control,
      (i) determining whether said data corresponding to said generated address are stored in said cache memory, and when said data corresponding to said generated addresses are not stored in said cache memory, taking no further action with respect to transferring that data; and
      (ii) when said data are stored in said cache memory, transferring said data corresponding to said generated address from said cache memory to said main memory.
42. The method wherein said step of transferring said data further comprises placing said data and an identifier corresponding to said data into a buffer to be transferred at some time in the future.
43. The method wherein said buffer is an aging/write buffer, and the method further comprises simultaneously searching for data in the aging/write buffer and in said cache memory.
44. The method wherein the step of transferring further comprises writing back to main memory and clearing a dirty bit associated with said transferred data so as to indicate that said data can be overwritten in said cache memory.
45. A method of operating a cache memory in conjunction with a processor and a main memory, said method comprising:
   (a) said processor issuing a non-blocking writeback instruction specifying a range of one or more addresses corresponding to data that are to be transferred from said cache memory into said main memory;
   (b) generating each individual address in said specified range of addresses independent of processor control;
   (c) for each generated address in said specified range of addresses, doing the following independent of processor control,
      (i) determining whether said data corresponding to said generated address are stored in said cache memory, and when said data corresponding to said generated address are stored in said cache memory, taking no further action with respect to transferring that data;
      (ii) when said data are stored in said cache memory, determining whether said data can be overwritten without loss of useful information, and when said data can be overwritten without loss of useful information, taking no further action with respect to transferring that data; and
      (iii) when said data cannot be overwritten without loss of useful information, placing said data and an identifier corresponding to said data into a buffer to be transferred from said main memory to said cache memory.
46. The method wherein said identifier of said data is at least a portion of said generated address.
47. The method wherein said step of determining whether said data can be overwritten without loss of useful information comprises inspecting a "dirty" bit stored in said cache memory.
48. A method of operating a computer system having a processor that executes a program, said method comprising:
   (a) identifying an address range corresponding to data that are desired to be removed from a cache memory in order to vacate space for newer data needed for future use in executing said program;
   (b) said processor issuing an instruction to write said data corresponding to said identified address range from cache memory to main memory; and
   (c) independently of processor control, transferring said data corresponding to said identified address range from cache memory to main memory at a time before said processor issues a request for said newer data.
49. The method wherein said step of identifying is performed by a programmable machine executing a writeback instruction that specifies said address range.
50. A method of operating a computer system having a processor that executes a program, said method comprising:
   (a) said processor issuing a non-blocking writeback instruction to prospectively free up memory space in a cache memory; and
   (b) said processor issuing a multiple-line non-blocking load instruction to transfer from a main memory to said cache memory a block of data that is desired to be stored in cache memory for future use in execution of said program.
51. A method of operating a cache memory in conjunction with a processor and a main memory, said method comprising:
   (a) said processor issuing a memory load instruction specifying a memory address;
   (b) testing said cache memory to determine whether data corresponding to said specified address are stored in said cache memory, and when data corresponding to said specified address are stored in said cache memory, servicing said memory load instruction from said cache memory;
   (c) when said data corresponding to said specified address are not stored in said cache,
      (i) servicing said memory load instruction from said main memory; and
      (ii) testing a transfer queue to determine whether an identifier corresponding to said specified address has been placed therein in response to a prior non-blocking load instruction, and when an identifier corresponds to said specified address has been placed therein in response to a prior non-blocking load instruction, deleting said identifier from said transfer queue.
52. A method of searching a plurality of cache memory address tags for a match with one of a plurality of address sources, said method comprising:
   (a) storing said plurality of tags into a plurality of cache tag memory blocks, each cache tag memory block being associated with a respective disjoint set of said address tags along with associated valid bits, and dirty bits;
   (b) multiplexing said plurality of address sources so that each said source is at various times independently applied to one of said cache tag memory blocks;
   (c) selectively coupling said address sources to different ones of said cache tag memory blocks; and
   (d) comparing addresses from said address sources with said tags in said cache tag memory blocks to detect whether each address from said address sources matches one of said tags in said cache memory tag blocks.
53. The method wherein the step of selectively coupling further comprises the steps of (i) detecting whether the addresses from a plurality of said address sources are addressed to the same one of said memory blocks and, if so, (ii) determining which of said address sources should be given priority with respect to that memory block.
54. The method wherein one of said plurality of address sources contains a requested address corresponding to a processor access operation and another one of said plurality of address sources contains a requested address corresponding to a snoop operation and wherein the step of determining which one of said address sources should be given priority for a particular one of said memory blocks comprises the further step of:
   (i) comparing at least a part of each of said requested addresses to determine whether said requested addresses correspond to the same location in said memory block and, if so, giving priority to said address source containing a requested address corresponding to said snoop operation.
55. The method wherein the step of determining which one of said address sources should be given priority for a particular one of said memory blocks comprises the further step of testing to see whether said address source containing a requested address corresponding to a processor access operation has been stalled at least once in order to give priority to said address source containing an address corresponding to a snoop operation and, if so, giving priority to said address source containing a requested address corresponding to said processor access operation.
56. The method wherein one of said plurality of address sources contains a requested address corresponding to a processor access operation and another one of said plurality of address sources contains a requested address corresponding to a snoop operation and wherein the step of determining which one of said address sources should be given priority for a particular one of said memory blocks comprises the further step of:
   (i) comparing at least a part of each of said requested addresses to determine whether said requested addresses correspond to the same location in said memory block and, if not, giving priority to said address source containing a requested address corresponding to said processor access operation.
57. A cache system for caching addressable data, said system comprising:
   (a) data storage;
   (b) tag storage associated with said data storage and subdivided into a plurality of tag memory blocks and tag comparators, each of said tag memory blocks being associated with a respective disjoint set of addresses and connected to a respective one of said tag comparators for comparing a selected address to tags stored in each of said tag memory blocks along with associated valid and dirty bits; and
   (c) for each of said tag comparators, respective address multiplexor connected to a plurality of memory address sources so that each of said tag comparators can independently receive a selected address from any one of said address sources.
58. The cache system wherein said data storage is subdivided into a plurality of data memory blocks, each having a respective data bus for input and output of data.
59. The cache system wherein (i) each data memory block is associated with a respective disjoint set of data addresses and (ii) the sets of data addresses associated with each data block is different from the set of addresses associated with each tag memory block.
60. A method of managing an aging/write buffer, said buffer comprising an address array with at least one address entry and a data array with at least one data array wherein each address entry is associated with a data entry, said method comprising:
   (a) identifying at least one of said data entries in said buffer to be prospectively made available for a substitution of new data for that currently being stored; and
   (b) placing said identified data entry in a condition to be overwritten with said new data.
61. The method wherein the number of data entries identified is four.
62. The method wherein the step of identifying comprises the further steps of (i) determining the least recently used one of said data entries and (ii) selecting that entry to be made available for said substitution of data.
63. The method wherein the step of placing said identified data entry in a condition to be overwritten comprises the further steps of (i) performing a writeback operation when a dirty bit associated with said identified data entry is active and (ii) clearing said dirty bit.

## Claims

1. In a computer system having a processor (100), a cache (300), and an address bus (600) connecting said processor and said cache for transferring addresses from said processor to said cache characterized by, a cache memory address unit comprising:
(a) an instruction bus (800) distinct from said address bus;
(b) logic circuitry (200) connected to said processor via said instruction bus, said logic circuitry generating addresses independently of processor control in response to instructions received from said processor; and
(c) cache output bus (700) connecting said logic circuitry to said cache for conveying said generated addresses to said cache for use in cache operations.

2. The computer system of claim 1, further characterized by cache tag memory connected to said cache memory address unit via said address output bus for receiving addresses from said output address bus.

3. The computer system of either of claim 2, further characterized by cache data memory associated with said cache tag memory so that lines of data in said cache data memory are associated with respective tags stored in said cache tag memory block.

4. The computer system of either of claims 2 or 3, further characterized by:
(a) an internal address bus connecting said cache tag memory to said processor so that said processor can address said cache tags, and
(b) an external address bus connecting said cache tag memory to said processor and said main memory so that addresses can be transferred among said cache tag memory, said processor and said main memory.

5. The computer system of any of claims 1-4, further characterized by a transfer queue connected to said cache memory address unit via said output address bus for receiving addresses from said cache memory address unit; and

6. The computer system of any of claims 1-5, rurther characterized by an aging/write buffer connected to said cache memory address unit via said output address bus for providing an address to said aging/write buffer for comparison with entries therein.

7. The computer system of any of claims 2-6, further characterized in that said cache tag memory comprises a plurality of tag memory blocks and tag comparators, each of said tag memory blocks being associated with a respective disjoint set of addresses.

8. The computer system of claim 7 further characterized in that said cache tag memory further comprises an address multiplexor connected to said output bus, said internal address bus, and said external address bus, so that each of said address sources can be independently coupled to a different one of said tag memory blocks.

9. The computer system of any of claims 2-8, further characterized in that said cache data memory is subdivided into a plurality of data memory blocks, each having a respective data bus for input and output of data.

10. The computer system of any of claims 2-9, wherein said cache tag memory and said cache data memory are each subdivided to provide a data cache and an instruction cache distinct from said data cache.
